**Europäisches Patentamt**

**European Patent Office**

**Office européen des brevets**

(19)

(11) Veröffentlichungsnummer : **0 462 125 B1**

(12) **EUROPÄISCHE PATENTSCHRIFT**

(45) Veröffentlichungstag der Patentschrift :
**11.11.92 Patentblatt 92/46**

(51) Int. Cl.⁵ : **B65G 1/04**

(21) Anmeldenummer : **90903763.2**

(22) Anmeldetag : **02.03.90**

(86) Internationale Anmeldenummer :
**PCT/DE90/00150**

(87) Internationale Veröffentlichungsnummer :
**WO 90/10585 20.09.90 Gazette 90/22**

(54) **EINSCHUBLAGER FÜR ROLLPALETTEN UND VERFAHREN ZUM EIN- UND AUSLAGERN DES LAGERGUTES.**

(30) Priorität : **07.03.89 DE 3907264**

(43) Veröffentlichungstag der Anmeldung :
**27.12.91 Patentblatt 91/52**

(45) Bekanntmachung des Hinweises auf die
Patenterteilung :
**11.11.92 Patentblatt 92/46**

(84) Benannte Vertragsstaaten :
**CH DE FR GB IT LI**

(56) Entgegenhaltungen :
**DE-A- 1 906 282**
**DE-A- 2 350 615**
**DE-A- 3 038 474**

(73) Patentinhaber : **Miele & Cie. GmbH & Co.**
**Carl-Miele-Strasse**
**W-4830 Gütersloh 1 (DE)**

(72) Erfinder : **HELLKUHL, Ludger**
**Kardinal-von-Galen-Strasse 5**
**W-4830 Gütersloh (DE)**
Erfinder : **MÖRS, Siegfried**
**Angelastrasse 18c**
**W-4830 Gütersloh (DE)**
Erfinder : **PELZER, Günter**
**Diekstrasse 32**
**W-4830 Gütersloh (DE)**
Erfinder : **WESSELMANN, Friedhelm**
**Kahlerstrasse 208**
**W-4830 Gütersloh (DE)**

EP 0 462 125 B1

## Beschreibung

Die Erfindung betrifft ein Einschublager für Rollpaletten.

Das vorgegebene Lager soll über eine hohe Speicherdichte verfügen und für die Lagerung von Massengütern dienen.

Zur Erfüllung dieser Erfordernisse ist bereits aus der DE-A-19 06 282 ein Warenlager in Form von Regalen mit einer Vielzahl über- und -nebeneinander angeordneter Fächer zur Aufnahme des Lagergutes ' bekannt. Zwischen jeweils zwei benachbarten Regalen sind befahrbare Bedienungsgänge für Stapelkrane und andere Hebemittel vorgesehen. Die notwendigen Betriebs- und Bedienungseinrichtungen sind im Untergeschoß angeordnet, wobei in der Decke des Untergeschosses Durchbrüche angeordnet sind, die von den Hubmitteln durchfahren werden können und Verbindungen innerhalb des Gesamtkomplexes zum Manipulieren des ein- und ausgehenden Lagergutes bilden.

Die übereinander angeordneten Lagerkanäle werden direkt von den Hubgeräten bedient. Jeder Lagerkanal weist geneigte Führungsschienen auf, so daß das Lagergut immer an den Anfang des Lagerkanals zurückrollt.

Bei diesem Lager wird es als besonders nachteilig angesehen, das über ein Hubgerät mehrere Lagerkanäle bedient werden müssen, wodurch sich die Umschlagzeiten unnötig erhöhen. Außerdem sind erhöhte Anforderungen an die Hubgeräte zu stellen, da sie sowohl Vertikal- als auch Horizontaltransporte durchführen müssen. Die Stahlskelettkonstruktion für das Hochregal muß für jeden Lagerkanal eine aufwendige Gangsicherung für das Lagergut aufgrund der geneigten Führungsschienen aufweisen.

Aus der DE-A1-32 21 026 ist bereits eine Trennung von Horizontal- und Vertikaltransport bei einem Lagersystem mit nicht geneigten Regalschienen bekannt. Hier wird ein auf drei Lageretagen begrenztes Lagersystem beschrieben, in dem der gesamte Ein- und Auslagerförderstrom über die mittlere Lageretage abgewickelt wird und das Lagergut mit jedem Fördertakt von der mittleren Lageretage ausgehend abwechselnd einmal in die obere und einmal in die untere Lageretage gefördert wird und umgekehrt. Dabei ist es besonders nachteilig, daß die Anzahl der Speicherplätze auf drei Lageretagen begrenzt ist. Sind weitere Speicherplätze erforderlich, muß das Lagersystem um ein zusätzliches, ebenfalls wieder aus drei Lageretagen bestehendes Lagersystem erweitert werden. Bei dem zusätzlichen Lagersystem ist dann auch die mittlere Lageretage für den Ein- und Auslagerförderstrom vorgesehen. Weiterhin sind bei einem derartigen Lager zusätzliche Flächen für die Bereitstellung und Kommissionierung des Lagergutes erforderlich.

Der Erfindung liegt die Aufgabe zugrunde, ein Lager mit möglichst geringer Grundfläche zu schaffen, bei dem eine größere Anzahl von Speicherplätzen zur Verfügung steht und außerdem das automatische und platzgenaue Sortieren mehrerer Ladungs- bzw. Versandaufträge nach vorgegebenen Ladelisten innerhalb des Lagers möglich ist und bei dem separate Fördermittel für Horizontal-und Vertikaltransport vorgesehen sind.

Diese Aufgabe wird erfindungsgemäß durch die Merkmale des Anspruchs 1 gelöst. Vorteilhafte Ausgestaltungen und Weiterbildungen sowie ein Verfahren zur Ein- und Auslagerung des Lagergutes ergeben sich aus den nachfolgenden Ansprüchen.

Die mit der Erfindung erzielten Vorteile bestehen insbesondere darin, daß auf einer relativ geringen Lagergrundfläche die Lagerung, Kommissionierung und Bereitstellung von Lagergut nach Versandaufträgen bzw. Ladelisten erfolgen kann, wobei eine exakte Sortierung bei paralleler Abwicklung mehrerer Aufträge möglich ist.

Ein Ausführungsbeispiel der Erfindung ist in der Zeichnung dargestellt und wird im folgenden näher beschrieben. Es zeigen:

Fig. 1 ein Einschublager in der Seitenansicht im Schnitt,

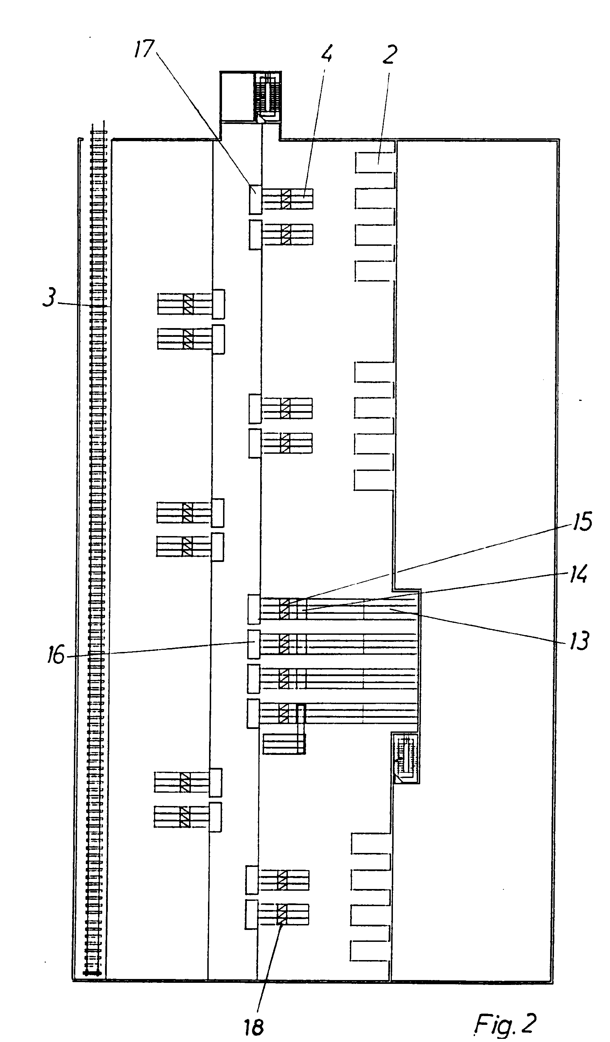

Fig. 2 die Operationsebene in der Draufsicht,

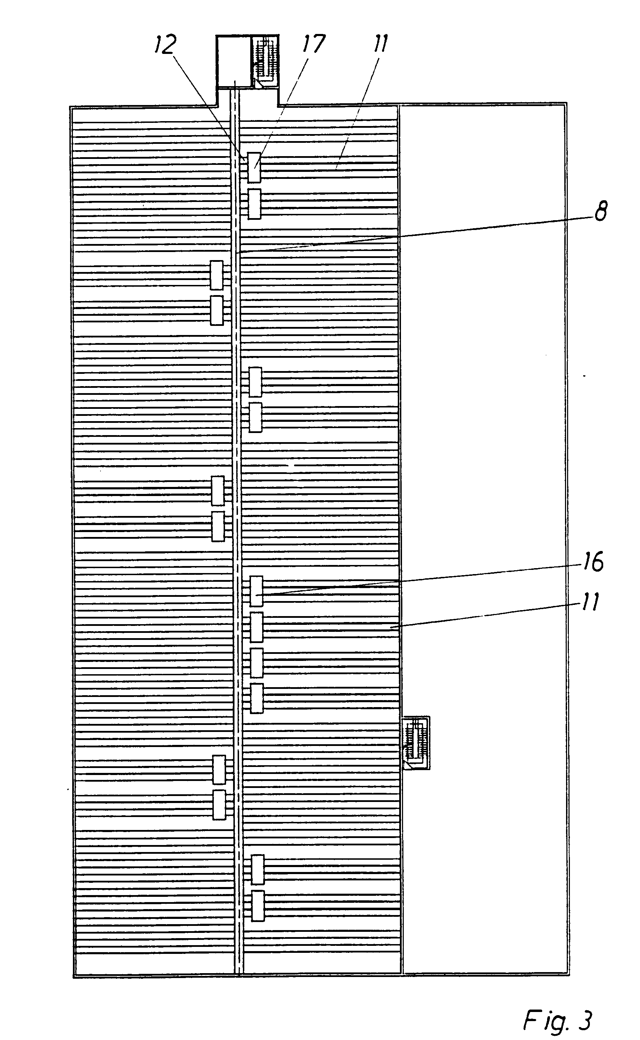

Fig. 3 eine Lagerebene in der Draufsicht,

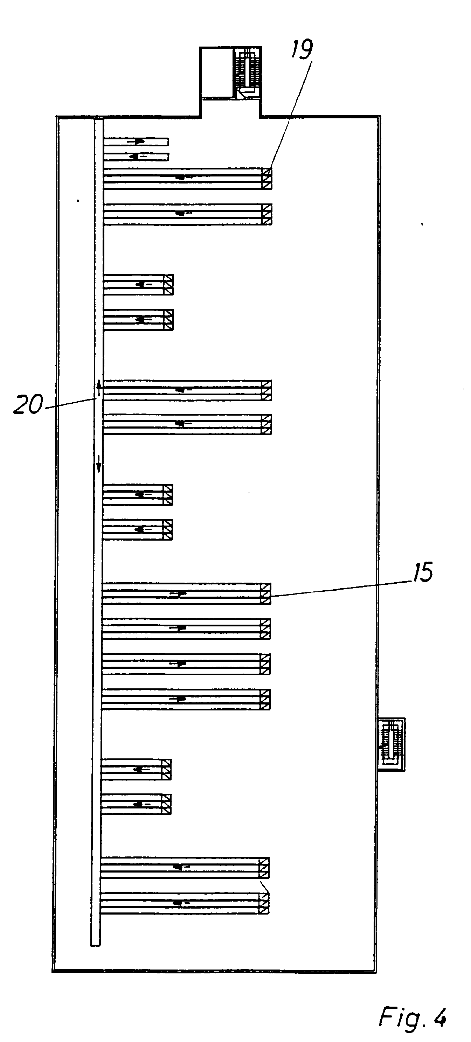

Fig. 4 die Hilfsoperationsebenen in der Draufsicht.

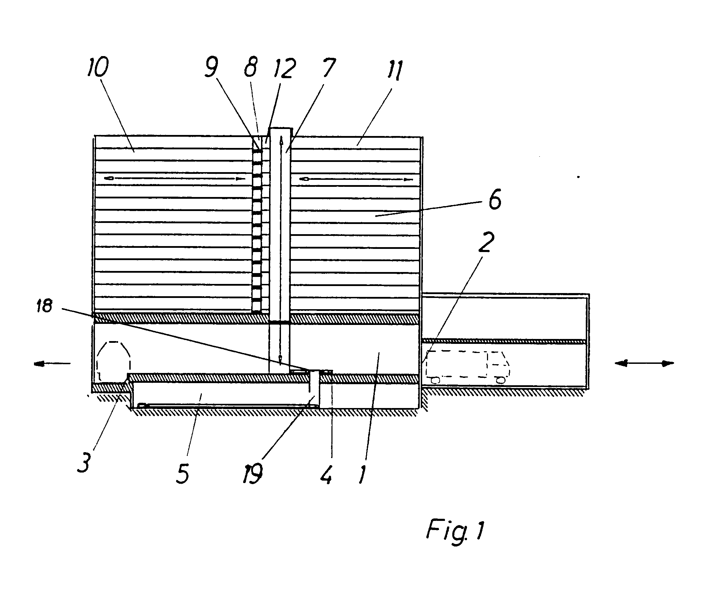

In der Figur 1 ist die Operationsebene eines Einschublagers mit (1) bezeichnet. Über die Operationsebene wird die Ein- und Auslagerung des Lagergutes abgewickelt.

Die Operationsebene (1) weist Rampen für die Anlieferung und den Abtransport des Lagergutes per LKW (2) sowie Rampen für den Abtransport des Lagergutes per Bahn (3) auf. Den Rampen sind entsprechende Ladestationen (4) zugeordnet.

Unterhalb der Operationsebene (1) ist die Hilfsoperationsebene (5) im Keller angeordnet. In dieser Ebene werden die leeren Rollpaletten gelagert und über entsprechende Einrichtungen wieder der Operationsebene (1) zugeführt. Oberhalb der Operationsebene (1) sind die Lagerebenen (6) angeordnet. Die Lagerebenen (6) sind mit der Operationsebene (1) und miteinander über Hubwerke (7) verbunden. Jede Lagerebene weist eine Transportgasse (8) auf, in der ein Transportfahrzeug (9) verfahrbar ist. Rechtwinklig zu dieser Transportgasse (8) sind die Lagerkanäle (10) sowie die Speicherbahnen (11) ausgerichtet. Der Transportgasse (8) bzw. dem Hubwerk (7) ist in jeder Lagerebene (6) ein Übergabeplatz (12) zugeordnet, so daß zwischen Hubwerk (7) und Transportfahrzeug (9) keine zusätzlichen Transportmittel erforderlich sind. Die Speicherbahnen (11) sind den Hubwerken (7) nachgeschaltet.

Im folgenden wird das Verfahren zum Ein- und Auslagern des Lagergutes näher beschrieben.

Die Anlieferung des Lagergutes erfolgt mittels LKW an einer LKW-Rampe (2) mit nicht näher gezeigten Einrichtungen zur Schnellentladung (13) und Entstapelung (14) des Lagergutes. Das Lagergut wird in einem nächsten Arbeitsschritt an einer Übergabestation (15) auf Rollpaletten gesetzt und für den Weitertransport in die Lagerebenen (6) bereitgestellt. Die Rollpaletten werden dazu direkt an der Übergabestation (15) aus der Hilfsoperationsebene (5) über eine Transporteinrichtung (19) zugeführt. In einem Arbeitsschritt können hier maximal drei verpackte Haushaltsgroßgeräte etc. auf Rollpaletten gesetzt werden. Diese Lagerguteinheit wird zu einem Anlieferungs-Hubwerk (16) für den Weitertransport in die Lagerebenen (6) gefördert. Über dieses Anlieferungs-Hubwerk (16) erfolgt nur die Einlagerung des Lagergutes. Das Anlieferungs-Hubwerk (16) fördert die Lagerguteinheit auf eine vom Lagerverwaltungsrechner festgelegte Lagerebene (6) und setzt die Lagereinheit auf dem dem Anlieferungs-Hubwerk (16) zugeordneten Übergabeplatz (12) der Lagerebene (6) ab. Das Transportfahrzeug (9) der jeweiligen Transportgasse (8) Übernimmt die Lagerguteinheit für den Weitertransport in die Lagerkanäle (10). Sollte der ausgewählte Übergabeplatz (12) bereits belegt sein, kann die Lagerguteinheit auch in die dem Anlieferungs-Hubwerk (16) zugeordnete Speicherbahn (11) transportiert werden, dort zwischengespeichert werden und zu einem späteren Zeitpunkt in die Lagerkanäle transportiert werden.

Innerhalb der Lagerkanäle (10) und Speicherbahnen (11) sind keine Förderhilfsmittel für den Transport des Lagergutes erforderlich. Die Rollpaletten sind untereinander durch an sich bekannte Kopplungsmechanismen verbunden und werden bei der Ein- und Auslagerung in bzw. aus einem Lagerkanal (10) oder einer Speicherbahn (11) miteinander gekoppelt bzw. entkoppelt.

Die Auslagerung des Lagergutes erfolgt über sogenannte Sortierhubwerke (17). Von den Übergabeplätzen (12) werden je nach Ladeauftrag eines bereitstehenden LKWs verschiedene Haushaltsgroßgeräte zu einer Ladeeinheit zusammengestellt. Dazu fördern die Transportfahrzeuge (9) der Transportgassen (8) die entsprechenden Haushaltgeräte aus den Lagerkanälen (10) zu den Übergabeplätzen (12) eines bestimmten Sortierhubwerkes (17), welches der zu bedienenden LKW-Rampe (2) zugeordnet ist. Das Sortierhubwerk (17) beschickt eine ihm in einer beliebigen Lagerebene (6) nachgeschaltete Speicherbahn (11), die eine Kommissionierzone darstellt, mit dem Lagergut. Dabei können verschiedene Gerätetypen schon in der Reihenfolge ihrer späteren Entladung am Versandort zwischengespeichert werden. Durch diese Maßnahme wird z. B. eine speditionsgerechte Rundtourbeladung möglich.

Sobald ein LKW zur Beladung an der Rampe (2) zur Verfügung steht, wird die Sortierfunktion des entsprechenden Hubwerkes (17) ausgeschaltet und das Hubwerk (17) steht nur noch, für die Auslagerung des Lagergutes zur Verfügung. Dabei werden die Rollpaletten mit den Geräten auf eine Entladestation (18) übergeben, die Geräte werden von den Rollpaletten getrennt und z. B. mit Hilfe von Gabelstaplern etc. auf den LKW oder bei Bahnverladung in den Waggon verladen. Die leeren Rollpaletten werden über eine Transporteinrichtung (19) in die Hilfsoperationsebene (5) gefördert und dann wieder an der Übergabestation (15) in der Operationsebene (1) zur Verfügung gestellt. Der Transport der leeren Rollpaletten innerhalb der Hilfsoperationsebene (5) erfolgt über ein nicht näher erläutertes Transportsystem (20) zwischen den Transporteinrichtungen (19).

**Patentansprüche**

1. Einschlublager für Rollpaletten mit mindestens drei übereinander angeordneten Lagerbereichen, wobei eine Lagerbereich als Operationsebene (1) für die Ein- und Auslagerung des Lagergutes ausgebildet ist, ein weiterer Lagerbereich mit einer oder mehreren übereinander angeordneten, horizontal ausgerichteten Lagerebenen (6) für die Lagerung und Kommissionierung des Lagergutes ausgebildet ist, in dem jede Lagereben (6) mindestens eine rechtwinklig zu den Lagerkanälen (10) der Lagerebene (6) angeordnete Transportgasse (8) mit darin verfahrbaren Transportfahrzeugen (9) aufweist, welche entsprechende Einrichtungen für die Ein- und Auslagerung der Rollpaletten in die Lagerkanäle (10) aufweisen und die Einrichtungen die Rollpaletten jeweils am Anfang eines Lagerkanals (10) absetzen und diese mit einer im Lagerkanal (10) befindlichen Rollpalette Koppeln und umgekehrt und wobei ein weiterer Lagerbereich für die Lagerung, Bereitstellung und Zufuhr der Rollpaletten in die Operationsebene (1) als Hilfsoperationsebene (5) ausgebildet ist.

2. Einschublager für Rollpaletten nach Anspruch 1, in dem die Operationsebene (1) im Erdgeschoß des Lagers, die Hilfsoperationsebene (5) im Keller des Lagers und die Lagerebenen (6) oberhalb der Operationsebene (1) angeordnet sind.

3. Einschublager für Rollpaletten nach Anspruch 1 und 2, in dem jede Lagerebene (6) eine oder mehrere Lagerzonen, die als Lagerkanäle (10) ausgebildet sind, und eine oder mehrere Kommissionierzonen, die als Speicherbahnen (11) ausgebildet sind, aufweist.

4. Einschublager für Rollpaletten nach einem der Ansprüche 1 bis 3,
in dem
die Operationsebene (1) mit den Lagerebenen (6) sowie die Lagerebenen (6) untereinander über Hubwerke (7) miteinander verbunden sind.

5. Einschublager für Rollpaletten nach einem der Ansprüche 1 bis 4,
in dem
in jeder Lagerebene (6) ein Übergabeplatz (12) sowohl einem Hubwerk (7) als auch einer Transportgasse (8) zugeordnet ist.

6. Einschublager für Rollpaletten nach einem der Ansprüche 1 bis 5,
in dem
jedem Hubwerk (7) in jeder Lagerebene (6) eine Speicherbahn (11) zugeordnet ist.

7. Einschublager für Rollpaletten nach einem der Ansprüche 1 bis 6,
in dem
ein oder mehrere Hubwerke (7) als Anlieferungs-Hubwerke (16) ausgebildet sind.

8. Einschublager für Rollpaletten nach einem der Ansprüche 1 bis 6,
in dem
ein oder mehrere Hubwerke (7) als Sortierhubwerke (17) ausgebildet sind.

9. Einschublager für Rollpaletten nach einem der Ansprüche 1 bis 8,
in dem
die Hilfsoperationsebene (5) mit Transporteinrichtungen (19) für die Bedienung der Operationsebene (1) mit Rollpaletten ausgebildet ist.

10. Einschublager für Rollpaletten nach einem der Ansprüche 1 bis 9,
in dem
die Hilfsoperationsebene (5) mit einem Transportsystem (20) zur Verbindung der Transporteinrichtungen (19) ausgebildet ist.

11. Verfahren zum Ein- und Auslagern von Lagergut in einem Einschublager für Rollpaletten nach Anspruch 1,
in dem
die Ein- und Auslagerung der Lagergutes über die Operationsebene (1) ausgeführt wird.

12. Verfahren zum Ein- und Auslagern von Lagergut nach Anspruch 11,
in dem
das Lagergut über ein Anlieferungs-Hubwerk (17) in die Lagerebenen (6) gefördert wird.

13. Verfahren zum Ein- und Auslagern von Lagergut nach Anspruch 11 oder 12,
in dem
das Lagergut mit Hilfe der Transportfahrzeuge (9) und der Sortierhubwerke (17) entsprechend der vorgegebenen Ladelisten in einer Speicherbahn (11) für den Abtransport bereitgestellt wird.

## Claims

1. Slide-in store for roller pallets, having at least three storage regions disposed above one another, wherein one storage region is adapted as the operational level (1) for the storage and withdrawal of the goods, an additional storage region is provided with one or more horizontally orientated storage levels (6), which are disposed above one another, for the storage and consignment of the goods, in which store each storage level (6) has at least one conveyor path (8), which extends at right angles to the storage channels (10) of the storage level (6) and has conveyor vehicles (9) drivable therein, which vehicles have appropriate means for the storage and withdrawal of the roller pallets in and from the storage channels (10), and said means deposit each of the roller pallets at the beginning of a respective storage channel (10) and connect such pallets to a roller pallet situated in the storage channel (10), and vice versa, and wherein an additional storage region for the storage, preparation and supply of the roller pallets into the operational level (1) is adapted as an auxiliary operational level (5).

2. Slide-in store for roller pallets according to claim 1, in which the operational level (1) is disposed on the ground floor of the store, the auxiliary operational level (5) is disposed in the basement of the store, and the storage levels (6) are disposed above the operational level (1).

3. Slide-in store for roller pallets according to claims 1 and 2, in which each storage level (6) has one or more storage zones, which are adapted as storage channels (10), and one or more consignment zones, which are adapted as storage paths (11).

4. Slide-in store for roller pallets according to one of claims 1 to 3, in which the operational level (1) is connected to the storage levels (6), and the storage levels (6) are interconnected beneath one another through the intermediary of lifting units (7).

5. Slide-in store for roller pallets according to one of claims 1 to 4, in which a transfer station (12) in each storage level (6) is associated both with a lifting unit (7) and with a conveyor path (8).

6. Slide-in store for roller pallets according to one of claims 1 to 5, in which a storage track (11) is associated with each lifting unit (7) in each storage level (6).

7. Slide-in store for roller pallets according to one of claims 1 to 6, in which one or more lifting units (7) are adapted as supply lifting units (16).

8. Slide-in store for roller pallets according to one of claims 1 to 6, in which one or more lifting units (7) are adapted as sorting lifting units (17).

9. Slide-in store for roller pallets according to one of claims 1 to 8, in which the auxiliary operational level (5) is provided with conveyor means (19) for the operation of the operational level (1) with roller pallets.

10. Slide-in store for roller pallets according to one of claims 1 to 9, in which the auxiliary operational level (5) is provided with a conveyor system (20) for the connection of the conveyor means (19).

11. Method of storing and withdrawing goods in and from a slide-in store for roller pallets according to claim 1, in which the goods are stored and withdrawn through the intermediary of the operational level (1).

12. Method of storing and withdrawing goods according to claim 11, in which the goods are conveyed into the storage levels (6) through the intermediary of a supply lifting unit (17).

13. Method of storing and withdrawing goods according to claim 11 or 12, in which the goods are prepared in a storage track (11) for the removal process by means of the conveyor vehicles (9) and the sorting lifting units (17) in accordance with the prescribed bills of lading.

## Revendications

1. Entrepôt à insertion pour palettes roulantes, comprenant au moins trois zones d'entrepôt superposées dont l'une est réalisée comme un plan d'opération (1) pour la mise en entrepôt et la sortie des marchandises hors de l'entrepôt, une autre zone d'entrepôt comporte un ou plusieurs plans de magasinage (6) orientés horizontalement et superposés pour le magasinage et la préparation des marchandises pour l'expédition, chaque plan de magasinage (6) de cette zone possédant au moins une allée de transport (8) disposée à angle droit par rapport à des canaux de magasinage (10) du plan de magasinage (6) et dans laquelle peuvent circuler des véhicules de transport (9), lesquels présentent des dispositifs appropriés pour la mise en entrepôt des palettes dans les canaux et l'extraction des palettes roulantes hors des canaux de magasinage (10), les dispositifs déposant les palettes chaque fois au début d'un canal de magasinage (10) et accouplant la palette à une palette roulante se trouvant dans le canal de magasinage (10), et inversement, et une zone d'entrepôt supplémentaire qui est réalisée comme un plan d'opération auxiliaire (5) pour le rangement, la mise à disposition et l'amenée des palettes roulantes dans le plan d'opération (1).

2. Entrepôt à insertion pour palettes roulantes selon la revendication 1, dans lequel le plan d'opération (1) est agencé au rez-de-chaussée de l'entrepôt, le plan d'opération auxiliaire (5) est agencé dans le sous-sol de l'entrepôt et les plans de magasinage (6) sont agencés au-dessus du plan d'opération (1).

3. Entrepôt à insertion pour palettes roulantes selon les revendications 1 et 2, dans lequel chaque plan de magasinage (6) présente une ou plusieurs zones de magasinage réalisées comme des canaux de magasinage (10) et une ou plusieurs zones de préparation des marchandises pour l'expédition, réalisées comme des pistes d'entreposage (11).

4. Entrepôt à insertion pour palettes roulantes selon une des revendications 1 à 3, dans lequel les plans de magasinage (6) sont reliés au plan d'opération (1) et entre eux par des monte-charge (7).

5. Entrepôt à insertion pour palettes roulantes selon une des revendications 1 à 4, dans lequel un lieu ou poste de transfert (12) est coordonné dans chaque plan de magasinage (6) à la fois à un monte-charge (7) et à une allée de transport (8).

6. Entrepôt à insertion pour palettes roulantes selon une des revendications 1 à 5, dans lequel une piste d'entreposage (11) est coordonnée à chaque monte-charge (7) dans chaque plan de magasinage (6).

7. Entrepôt à insertion pour palettes roulantes selon une des revendications 1 à 6, dans lequel un ou plusieurs monte-charge (7) sont réalisés comme des monte-charge d'approvisionnement (16).

8. Entrepôt à insertion pour palettes roulantes selon une des revendications 1 à 6, dans lequel un ou plusieurs monte-charge (7) sont réalisés comme des monte-charge d'extraction/groupage (17).

9. Entrepôt à insertion pour palettes roulantes selon une des revendications 1 à 8, dans lequel le plan d'opération auxiliaire (5) est muni de dispositifs de transport (19) pour alimenter le plan d'opération (1) en palettes roulantes.

10. Entrepôt à insertion pour palettes roulantes selon une des revendications 1 à 9, dans lequel le plan d'opération auxiliaire (5) est muni d'un système de transport (20) pour relier les dispositifs de transport (19) entre eux.

11. Procédé pour l'entrée de marchandises à stocker et la sortie de marchandises hors d'un entrepôt à insertion pour palettes roulantes selon la revendication 1, dans lequel l'entrée des marchandises à stocker et la sortie des marchandises hors de l'entrepôt s'effectuent par le plan d'opération (1).

12. Procédé pour l'entrée de marchandises à stocker et la sortie de marchandises hors d'un entrepôt, selon la revendication 11, dans lequel les marchandises à stocker sont transportées dans les plans de magasinage (6) au moyen d'un monte-charge d'approvisionnement (16).

13. Procédé pour l'entrée de marchandises à stocker et la sortie de marchandises hors d'un entrepôt, selon la revendication 11 ou 12, dans lequel, à l'aide des véhicules de transport (9) et des monte-charge d'extraction/groupage (17), les marchandises à sortir sont mises à disposition pour l'évacuation dans une piste d'entreposage (11) selon des listes de chargement prédéterminées.

Fig. 1

Fig. 2

Fig. 3

*Fig. 4*